# EUROPEAN PATENT SPECIFICATION

(11) **EP 2 560 501 B1**
(45) Date of publication and mention of the grant of the patent: **30.05.2018**
(21) Application number: 11718962.1
(22) Date of filing: 18.04.2011
(51) Int. Cl.: A23G 4/12, A23G 4/20, A23G 4/06, A23P 10/30, A23L 27/00, A23L 33/15, A23L 33/155, A23L 33/20

(54) **SLOW-RELEASE DIETARY FORMULATIONS**
DIÄTETISCHE RETARD-FORMULIERUNGEN
FORMULATIONS ALIMENTAIRES À LIBÉRATION LENTE

(30) Priority: 20.04.2010 IT MI20100673
(43) Date of publication of application: 27.02.2013
(73) Proprietor: Perfetti Van Melle S.p.A., 20020 Lainate (Milano) (IT)
(72) Inventor: COLLE, Roberto, I-20020 Lainate (MI) (IT); DELEO, Maurizio, I-20020 Lainate (MI) (IT); SALMOIRAGHI, Guglielmo, I-20020 Lainate (MI) (IT); WALZL, Martin, I-20020 Lainate (MI) (IT)
(74) Representative: Minoja, Fabrizio
(86) International application number: PCT/EP2011/056127
(87) International publication number: WO 2011/131618

(56) References cited:
- WO-A2-2006/089200
- US-A- 4 515 769
- US-A- 5 629 035
- US-A1- 2003 187 122

## Description

The present invention relates to dietary formulations for the slow release of water-soluble active ingredients.

### Prior art

Dietary formulations for the slow release of active ingredients, designed for inclusion in edible compositions, have been studied, as active ingredients included "as is" are often released during chewing in an unbalanced way compared with the other ingredients. This imbalance can lead to problems with the palatability of the edible composition or the functionality of the active ingredient.

Chewing gum is a particular edible composition, characterised by the presence of an inedible chewable bolus, the gum base, wherein the slow release of an active ingredient during chewing is particularly desirable, considering the time taken to chew a piece of gum is typically around 20 minutes. Moreover, water-soluble ingredients in chewing gum are released faster during chewing than fat-soluble ingredients, which are retained by the gum base.

For the purposes of the present invention, "active ingredient" means an ingredient able to perform a metabolic or nutritional function (such as vitamins or mineral salts) or an organoleptic function (such as flavours, sweeteners or organic acids).

Numerous documents in the prior art deal with this problem, but further improvements are still required.

US 4386106 discloses processes for the preparation of delayed-release flavours, and chewing gums containing said flavours. However, that process necessarily applies to only one type of active ingredient, the flavours, and involves a time lag before release begins. Moreover, this process teaches that the outer coating must be limited to 10% of the weight of the final formulation, as unpleasant crunchy sensations during chewing and an excessively low sensory perception will otherwise arise. As will be evident from the description, the Applicant has found a slow-release formulation and a process for obtaining it which is applicable to a plurality of active ingredients wherein, surprisingly, an outer coating weighing more than 10% allows slow release during consumption without any sensation of crunchiness of the formulations.

US 2006/0263478 discloses release systems applicable to a number of active constituents, necessarily incorporated in an encapsulating agent which is coated in turn, wherein the ultimate tensile strength exceeds 6500 psi, thus including a physical parameter which is difficult to measure and must be determined. Moreover, two coating systems must necessarily be present. In the description of the method used to obtain the invention, the active ingredient is mixed with the hot encapsulating agent to obtain a coacervate which is blended (melt-blend technique) and then coated. The blending stage must necessarily be conducted discontinuously from the other ones, thus slowing the process and leading to a statistical dispersion of the particle sizes. In practice, blending must often be followed by sieving to eliminate granules which are too large or too small. The Applicant has found a slow-release dietary formulation and a process of obtaining it which does not require blending stages, can be conducted continuously without having to select a specific ultimate tensile strength, and need not necessarily contain two components: an encapsulating agent and a coating ingredient.

US 2006/263472 discloses release systems for coated active constituents. The system must necessarily include an encapsulating and a coating constituent. Moreover, it teaches that the coating component must be less miscible with the encapsulating agent than the encapsulating agent with the active ingredient. The Applicant has surprisingly discovered a release system and a manufacturing method wherein it is not necessary to have two constituents (a coating and an encapsulating constituent) in addition to the active ingredient. By contrast with the teaching of US 2006/263472, the Applicant has also discovered a slow-release system wherein the optional but not mandatory presence of a second coating element is characterised by the fact that the miscibility between the two coating constituents is greater than the miscibility between either of the two coating constituents and the active ingredient.

US 2003/0187122 describes an aqueous dispersion of polyvinyl acetate. Said dispersion must necessarily contain a protective colloid and an ionic emulsifier. Moreover, said mixture can be used in a plurality of applications, including coating of systems containing ingredients with nutritional value (vitamins and minerals). The mixture can be applied with spray systems such as fluid-bed systems like those described in US 3196827. One of the advantages claimed by the inventors is that systems coated with said dispersion are not tacky. However, the presence of at least one ionic emulsifier is undesirable in conjunction with food-grade dosage forms, as many ionic emulsifiers are not allowed for use in foodstuffs because of their toxicity and the soapy flavour often associated with said additives. Said problems are particularly significant with the preferred emulsifier, sodium lauryl sulphate, which is encountering increasing problems as a sensitiser. However, the Applicant has surprisingly found that the same advantages can be obtained with a stable aqueous emulsion in the absence of ionic emulsifiers, but only in the presence of a protective colloid.

US 3826847 describes processes for the preparation of chewing gum with a long-lasting flavour. To obtain the desired effect, "seasonings" including flavouring agents, acids and sweeteners, which are coated with polyvinyl esters using a plurality of methods, are described. They include the melt-blend method and a coating method based on solutions of polymers in organic solvents. In this second method, the presence of these solvents, which are obviously not food grade (such as ethyl acetate and hexane), must be eliminated if a dietary formulation is to be obtained. The system discovered by the Applicant avoids the use of organic solvents, thus solving at the root the problems connected with their presence.

US 4880649 discloses methods of coating leaves, powders or particles for infusion with flavoured emulsions. Said emulsions are based on polymers (including polyvinyl acetate and polyvinyl alcohol), and use emulsifiers in amounts ranging between 0.1% and 20%.

EP 273009 discloses the coating of centres (high-intensity sweeteners being preferred) with polyvinyl acetate. However, this document also discloses the use of emulsifiers, and the percentage of encapsulated active ingredient is limited to a maximum of 50%. Also in this document, the method of coating with polyvinyl acetate is that of a hot mixture in the presence of emulsifiers, which creates a coacervate of the coating element and active ingredient, followed by crushing. Said technique generates granules wherein part of the active ingredient is exposed on the surface, trapped in a porous coating matrix. The Applicant has surprisingly discovered a method which does not use emulsifiers and produces slow-release dietary formulations with a percentage of active ingredient exceeding 50%, and produces a particulate wherein the core containing the active ingredient is wholly coated by the outer coating, with advantages which will appear more clearly from the description and examples below.

US 4384004 discloses methods of coating aspartame. It is known that aspartame is not normally soluble in water with a neutral pH. The field of application is therefore different from that of the invention claimed by the Applicant. The same patent also contains teachings relating to coating with vinyl polymers using fluid-bed technology. However, it teaches that non-water-soluble polymers (including the vinyl polymers forming the subject of the present application) must be dissolved in organic solvents. This involves the problems already described and overcome by the Applicant, as already illustrated.

EP 229000 discloses active ingredients encapsulated in solvent-free compositions. However, said compositions are limited by the use of mixtures of polyvinyl acetate with a high molecular weight mixed with hydrophobic plasticisers. Moreover, the melt-blend or spray-congealing method is used to obtain the final composition. Both methods start with hot mixtures, but whereas in the melt-blend method the mixture is cooled and crushed, in the spray-congealing method the hot mixture is sprayed in a cold air stream: both methods damage the granules, which have part of the active ingredient exposed on the surface, trapped in a spongy coating matrix. The advantages of the invention claimed by the Applicant compared with these methods are that the temperatures necessary to soften polyvinyl acetate with a high molecular weight (80°C or more) are not used, the use of polymers with a high molecular weight is not mandatory, and a particulate is obtained wherein the core comprising the active ingredient is totally covered by the outer coating, with further advantages relating to the percentage of active ingredient which will appear more clearly from the following description and examples.

EP 1804596 discloses compositions wherein an active ingredient is coated by at least one layer comprising polyvinyl acetate and sucralose. When the coating is applied with fluid-bed technology, the polyvinyl acetate is dissolved in organic solvents such as ethyl acetate, acetone, benzene and others claimed. The problems associated with this methodology have already been discussed.

WO 2006/127065 claims active ingredient release systems characterised by pre-selected hydrophobicity. A method which is difficult to apply and retrieve, must be used in order to establish this condition. The use of emulsions is not disclosed. The Applicant has found that it is possible to coat water-soluble cores starting with aqueous emulsions of vinyl polymers without having to pre-select the hydrophobicity of the coating.

US 5057328 discloses how to obtain controlled-release systems of acids based on polyvinyl acetate for use in chewing gum. The system uses polyvinyl acetate mixed with emulsifiers, the drawbacks of which have already been discussed. They are obtained by the melt-blend method, followed by crushing and second coating: this is necessarily a discontinuous method, the drawbacks of which have already been discussed. Moreover, the type of acid and the mean molecular weight of the polymer must be accurately paired. The Applicant has discovered a method that allows water-soluble cores, including organic acids, to be coated without the use of emulsifiers, and without selecting the molecular weight of the polymer on the basis of the acids.

US 2002/0122842 discloses an encapsulate of a mixture of acids in polyvinyl acetate. The manufacturing method involves mixing the acids with grains of polyvinyl acetate and extruding the mixture. In a preferred embodiment, the acids are granulated together before the stage of encapsulation with polyvinyl acetate. The extruded mass is then crushed, thus exposing part of the mixture of acids. The document does not disclose the use of polyvinyl acetate suspensions. The Applicant has discovered a method which applies to a plurality of active ingredients, not only mixtures of acids, possibly granulated, which produces complete coating of the active ingredient.

US 7687092 discloses encapsulated lactic acid compositions and methods of obtaining them. The encapsulating agents cited include polymers, but the use of vinyl polymers or emulsions is not disclosed. However, polymers (the only one mentioned being polylactic acid) are included among the coating agents which can be applied after melting.

US 6529035, US 4515769, WO 2006/089200 teach the use of food ingredients or active ingredients using the fluid bed technique with polyvinyl acetate as one of the possible coating polymers. When emulsion are cited, no teaching is present about the emulsion composition and the possible presence of emulsifiers. Since the use of emulsifiers is a standard industrial practice, we can assume that emulsifiers were included in the eventually used emulsions.

Approximately 90% of vinyl emulsions, especially polyvinyl acetate emulsions, are used in the adhesive industry for paper and wood. Said emulsions are very often marketed in the form of a dry powder spray to be reconstituted. The specific applications include thin cardboard for packing, paper envelopes, multi-ply laminated paper, adhesive labels for wetting, and "white" glue for end users.

A smaller percentage of emulsions are used in the construction industry, for the installation of floors and panels.

Protective colloids and surfactants are used in manufacturing practice, not only as elements necessary for synthesis of the polymer, but also to modulate the final strength of the adhesive.

Vinyl emulsions designed for the above-mentioned applications are described, for example, in US 3433701, US 3213051, EP 705896, EP1088835, EP 1188775 and US 6515065; however, none of those patents discloses the use of emulsions in the food application.

US 2008/0262104 discloses the production of vinyl-acrylic copolymer emulsions, but with the use of ionic emulsifiers. Emulsions are used for numerous applications, including diet supplements, vitamins, and dietary active ingredients.

US 2003/0187122 also discloses an aqueous dispersion of polyvinyl acetate. Said dispersion must necessarily contain a protective colloid and an ionic emulsifier, and can be applied by methods similar to those used to obtain the present invention.

However, by contrast with said teachings, the Applicant has found that those methods are also applicable for aqueous dispersions of vinyl polymers and protective colloids not containing ionic emulsifiers.

In conclusion, known systems of obtaining formulations containing active constituents coated with vinyl polymers are disclosed. However, the systems described have one or more undesirable aspects: the use of organic solvents, the use of emulsifiers, the need of heating to the melting point of vinyl acetate and admixing the agent to be encapsulated within the hot melt, the need for crushing stages, their limitation to some particular active ingredients, some particular grades of polyvinyl acetate, and some properties to be pre-selected with difficult chemico-physical tests.

Dispersions of vinyl polymers and protective colloids without emulsifiers are described in the prior art and known as adhesives in the paper, wood and construction industries. The Applicant has surprisingly found that these systems can be used in applications in the dietary field, as claimed here, without causing problems of tackiness of the product during the manufacturing process or the subsequent storage of the product obtained according to the invention.

### Description of the invention

The Applicant has perceived the need for new and improved food-grade formulations for slow release of water-soluble active ingredients during the consumption of edible compositions.

In particular, the Applicant has perceived the need to devise a slow-release dietary formulation which does not contain non-food grade ingredients such as ionic surfactants and organic solvents.

It is also necessary to devise a slow-release dietary formulation that does not cause unpleasant sensations, such as crunchiness, during consumption, but without the need to pre-select some chemico-physical characteristics of the formulation.

At the same time, the Applicant has perceived the need to devise a method of manufacturing said formulations which can be used for a plurality of active ingredients with metabolic functions (water-soluble vitamins and mineral salts) or organoleptic functions (flavours in water-soluble solid form, organic acids and sweeteners).

Moreover, the Applicant has discovered a method of obtaining dietary formulations for the slow release of water-soluble active ingredients which can easily be performed continuously, and leads to total coating of the active ingredient.

The Applicant has surprisingly found that aqueous dispersions of polyvinyl acetate and polyvinyl alcohol, free of ionic emulsifiers and polyvinylpyrrolidone, can be advantageously used to coat water-soluble cores comprising an active element.

Said dispersions are applied to the core to coat it entirely, and rapidly evaporated to a minimum water content.

The dietary formulation thus obtained consists of a water-soluble core containing an active ingredient, and a shell covering said core. The shell substantially consists of a polymer matrix of polyvinyl acetate and polyvinyl alcohol. Said coating is typically not water-soluble, thus protecting the active ingredient from humidity during the subsequent stages of storage, inclusion in edible compositions, and storage of said compositions. Said shell also prevents salivary fluid from rapidly dissolving the water-soluble core during consumption, thus causing its unbalanced release compared with the other ingredients of the dietary formulation.

One of the preferred dietary compositions for the inclusion of said slow-release formulation is chewing gum, because water-soluble ingredients (such as sugars or polyalcohols) and fat-soluble constituents (essential oils, natural and artificial flavours) are naturally present in chewing gum. The presence of a chewable lipophilic medium such as gum base complicates the release times of these ingredients by retaining some of them, while others are dissolved faster by the saliva.

One of the preferred methods of obtaining the slow-release dietary formulation uses fluid-bed technology.

Using the same fluid-bed granulator, the Applicant has found that an intermediate coating with a less water-soluble layer than the core can be made, continuously if required, and then, without interruptions, followed by the final coating with the aqueous dispersion substantially consisting of polyvinyl acetate and polyvinyl alcohol. The use of this method gives particles whose core is totally and evenly coated, with a more homogenous particle size than the starting size. This system avoids grinding processes, which necessarily expose part of the active ingredient and disperse the particle sizes, necessitating sieving to eliminate particles that are too coarse or too fine.

### Brief description of figures

Figure 1 describes, with a block diagram, the manufacturing process according to the invention.
Figure 2 describes, with a block diagram, the manufacturing process of a preferred embodiment of the invention.
Figure 3 is a graph which evaluates the release of a preferred coated active ingredient according to the present invention, applied to a chewing gum (Gum A), by comparison with an embodiment according to the prior art (Gum B).

### Detailed description of the invention

### Water-soluble cores

A crucial aspect of the present invention is the water-soluble cores or centres which must be coated. These centres must contain at least one active ingredient.

Said active ingredient can constitute the whole or part of the water-soluble core. In particular, the active ingredient may not be directly water-soluble in itself, but included in a core rendered water-soluble by other constituents thereof.

As the field of application of the present invention is a food-grade composition, food-grade active ingredients are particularly desirable.

For the purpose of the present invention "active ingredient" means an ingredient performing a metabolic action or and organoleptic action, different from those needed for the fundamental energy intake like sucrose, starch, proteins, fats.

In an embodiment of the present invention active ingredients are selected from vitamins, mineral salts, antioxidants, alert-stimulating agents, concentrated herbal extract, flavours and acids and combinations thereof.

Examples of preferred active ingredients able to perform a metabolic action are vitamins, mineral salts, herbal extracts, antioxidants and combinations thereof.

Examples of preferred active ingredients that perform an organoleptic action are flavours, such as essential oils, natural flavouring substances, artificial flavouring substances and mixtures thereof, natural refreshing agents, artificial refreshing agents, sweeteners (including high-intensity sweeteners), cooking salt, monosodium glutamate, acidifiers and acidity correctors and mixtures thereof.

In a preferred embodiment of the present invention, the water-soluble core consists of acidifiers. The acidifiers can preferably be selected from the following organic acids: adipic, citric, fumaric, lactic, malic, oxalic, succinic and tartaric acid and mixtures thereof.

Examples of acidity correctors are sodium citrate, sodium lactate and potassium tartrate.

Acidity correctors are often mixed with acidifiers to moderate the pungent sensation they can produce in the oral cavity.

In the case of acidifiers in liquid form at room temperature, cores in which the acidifier is carried by a suitable carriers can be used. For example, lactic acid is marketed in an 88% acid solution. Said solution is liquid at room temperature, and consequently could not be coated "as is". However, forms of lactic acid which are carried by maltodextrin, for example, or coated, are also available, as disclosed by US7687092. Said form presents as a powder or grains which can be subjected without further modification to the process according to the present invention, in order to be transformed into the present invention.

In the case of acidifiers in solid form at room temperature, coating can be performed directly, as described above. Acidifiers available in solid form include adipic acid, citric acid (anhydrous and monohydrate), malic acid, tartaric acid and fumaric acid.

In a preferred form of embodiment of the present invention, the water-soluble core consists of vitamins. Vitamins C, A and E are particularly preferred. Said vitamins have antioxidant properties, which could easily deteriorate during storage of the foodstuffs in which they are incorporated due to oxidation by atmospheric oxygen in the presence of water.

Vitamin C occurs in the form of crystalline sodium ascorbate. Sodium ascorbate is water-soluble, and can constitute the whole of the cores used in the present invention.

Vitamins A and E are fat-soluble. However, water-soluble carried forms of these vitamins are readily available on the market, and can constitute the water-soluble cores according to the present invention.

In a preferred form of embodiment of the present invention, flavours are used as active ingredients. Flavours interact with a series of receptors in the consumer's nose and mouth, causing a series of organoleptic reactions, and characterising the foodstuff containing them with particular perfumes, flavours and sensations (including freshness and pungency). Flavours can be constituted by aromatic preparations (including essential oils), natural flavouring substances and artificial flavouring substances, flavourings deriving from heat treatments, flavouring substances deriving from the smoking process, and mixtures thereof.

Particularly preferred flavours are mint flavours. Typically, mint flavours are constituted by a number of essential oils, obtained by fractionated distillation of crude mint oil and mixed together. Natural or artificial flavouring substances (such as natural or artificial vanillin) can be added, and optionally substances with refreshing properties of natural origin (such as menthol) and/or artificial origin (such as N((5-methyl-2-isopropyl)cyclohexylcarbonyl)-glycine ethyl ester).

In a particularly preferred embodiment, the flavours used are fruit flavours. These flavours can be constituted by natural flavouring substances derived or not derived from the fruit associated with the final flavouring, artificial flavouring substances, aromatic preparations (including fruit juices and essential oils of fruit, flowers, berries, oleoresins, exudates, etc.) mixed together and optionally solubilised in appropriate solvents.

Said flavours are typically fat-soluble, and liquid at room temperature. However, forms of these flavours on a carrier are readily available on the market. Said carried forms are solid and water-soluble, and can constitute the water-soluble cores according to the present invention.

Preferred forms of carried flavours are spray-dried flavourings. In this formulation, an aqueous mixture of carrier such as gum arabic, maltodextrin, sorbitol, or optionally a mixture of these together with a flavour, is sprayed in a tower into a warm airstream. The water evaporates, leaving a fine powder consisting of flavour and carrier. Said powder can be granulated to produce larger cores.

Other types of flavours in solid form (extruded, adsorbed and coated) can be used.

The preferred carriers are gum arabic, maltodextrin, starch, modified starches, carbohydrates, polyalcohols, gelatine, pectin, cellulose, modified cellulose, vegetable gums, and combinations thereof.

One skilled in the art could easily realise that some active ingredients (such as lactic acid and vitamin E) can be mixed with some flavours (such as lemon flavour), thus increasing the complexity of the core to be coated, without excluding the presence of at least one active element as defined herein.

The water-soluble core comprising an active ingredient constitutes between 30% and 90%, or preferably between 50% and 85%, and even more preferably between 55% and 80% by weight of the slow-release dietary formulation.

In a preferred form of embodiment, in which the water-soluble core basically consists of the active ingredient, the active ingredient preferably constitutes more than 50%, and even more preferably more than 60% by weight of the slow-release dietary formulation. Said contents are advantageously superior to those taught in the prior art which uses the melt-blend technology.

One skilled in the art will easily realise that by using mixtures of different active ingredients in the water-soluble core, particular organoleptic and metabolic effects can be obtained.

### Intermediate coating

In a preferred form of embodiment of the present invention, the water-soluble core is coated with an intermediate coating that is less water-soluble than the centre, and then covered with the dispersion substantially consisting of polyvinyl acetate and polyvinyl alcohol. The decision as to whether to perform this coating depends on preferences in the conduct of the process: some cores tend to become tacky when they come into contact with the polymer dispersion, and consequently agglomerate. This phenomenon can be eliminated by using an intermediate coating.

The intermediate coating can consist of waxes, shellac or fats; preferably fats. The fats which can be used include, for example, animal, vegetable and synthetic fats selected from fractionated fats, partly hydrogenated fats and totally hydrogenated fats.

Said fats can be conveniently characterised with the percentage of solids at a certain temperature. The Applicant has found that it is preferable to use fats with a solid-state percentage greater than 70% at 40°C, and even more preferably greater than 90% at 40°C. Said fats have the advantage of evenly coating the cores and withstanding the subsequent stages of the process well. At the same time, said fats do not adversely affect the organoleptic properties of the finished slow-release dietary formulation when used in a food preparation.

The amount of the intermediate coating is determined by the extent to which it facilitates the completion of the successive stages of the manufacturing process according to the present invention. The intermediate coating is usually less than 40%, preferably less than 20%, and even more preferably less than 15% by weight of the slow-release formulation.

### Outer coating

Contrary to the teachings of the prior art, the Applicant has surprisingly found that food-grade outer coatings of water-soluble cores can be advantageously obtained from aqueous polymer dispersions of polyvinyl acetate in the presence of polyvinyl alcohol, but without the aid of emulsifiers, and preferably without ionic emulsifiers.

In the context of the, invention, aqueous dispersion is used as a comprehensive term for aqueous emulsion and suspension. Emulsion is commonly used for mixtures of two non miscible liquids (e.g. oil in water emulsion). Suspension is commonly used for mixtures of insoluble crystal-state solids in water (e.g. calcium phosphate suspension in water).

The term dispersion is here preferred because with some substances, like vinyl polymers, the situation may not be so clear cut whether of the term emulsion or suspension is the more appropriate one: tiny droplets of the polymer mixed in water may not be in crystal state, in the conditions relating to the present invention, yet they may not be considered liquid, but rather very viscous fluids. Intermediate conditions may also be possible (partly crystallized - partly non crystallized polymer).

The dispersed substances are also referred as dispersed solids or dry matter, meaning that upon evaporation of water a solid residue is left. Dispersed solids or dry matter can be expressed as % of the water dispersion.

The liquid substance in higher percentage in a dispersion is referred as dispersion-, emulsion- or suspension- medium. The term "aqueous dispersion" means here that water is the dispersion medium and organic solvents are not used as solution or suspension aid.

Less than 100 ppm of organic solvents may still be present in the dietary formulation as a carry-over effect from previous processing. Preferably organic solvents are present in quantity of less than 10 ppm. Still more preferably organic solvents are not detectable in the dietary formulation of the present invention.

Organic solvents were widely used in the prior art to dissolve or help to dissolve vinyl polymers. Classes of organic solvents are: alcohols, halogenated solvents, ethers, ketones, esters, olefins.

Examples of organic solvents include:
Alcohols: methanol, isopropanol, ethanol;
Halogenated solvents: methylene chloride, trichloroethane;
Ethers: di-ethyl ether, tetrahydrofuran, dioxane;
Ketones: 2-propanone, methyl-ethyl ketone;
Esters: ethyl acetate, methyl acetate;
Olefins: pentane, hexane, cyclohexane.
In the present invention, the dispersion of polyvinyl acetate and polyvinyl alcohol without organic solvents is used with the advantage of lower toxicity and wider food-grade status, despite the teaching of the prior art, encouraging the use of solvents.

In the present invention, the outer coating totally covers the water-soluble core. The method of obtaining this characteristic feature is illustrated in greater detail in connection with the manufacturing method according to the invention described below.

Dispersions in powder to be reconstituted before use can be used for the purpose of the present invention, but stable dispersions are particularly preferred.

The dry matter of the polymer dispersion substantially consists of polyvinyl acetate and polyvinyl alcohol as a protective colloid. In some embodiments of the invention the percent dry matter of the dispersion used during manufacture is from 10% to 50%, for instance 15%, 20%, 30%, 35%, 40% or 45%.

Other polymers can optionally be added to modulate the properties of the final slow-release composition. Polymers which can be used in the gum base exemplified in the part of the description relating to chewing gum are preferred.

In a preferred embodiment, a plasticiser is added to the polymer dispersion. The preferred plasticisers are glycerol esters (mono, di- or trialkylated) and glycols. Glycerol triacetate and propylene glycol are particularly preferred.

The plasticiser is preferably added in a amount below 5% of the dry matter of the polymer dispersion.

### Manufacturing process according to the invention

The aqueous polymer dispersion is loaded into a container from which it is taken up by a metering system. The system can vary according to the coating equipment used, but commonly consists of piping and pumps, and terminates in a spray nozzle. The dispersion is projected through the nozzle onto the centres, and then dried. This stage is repeated until the outer coating reaches a certain percentage by weight.

Preferably, the metering operations are conducted at room temperature whilst the water soluble cores and the coating growing onto it are also maintained at room temperature.

The term room temperature refers to common indoor temperatures, in the range from 15°C to 35°C.

Alternatively, the dispersion is heated to 80°C maximum prior to spraying, while the product is kept at temperature lower than 50°C, preferably lower that 40°C for the entire process. The applicant has found that using the dispersion and coating process of the present invention it possible to use lower temperatures in comparison to the known processes allowing the application to substrates such as temperature-sensitive vitamins or low boiling flavour, which could be degraded by higher temperatures.

One skilled in the art will easily realise that in the case of excessively viscous emulsions, pre-dilution with water or heating of the batching system could be performed.

In a preferred embodiment, the present invention is implemented by applying the polymer suspension in a fluid-bed granulator according to the Wurster process. In this process, the water-soluble cores are suspended in a hot airstream. After a period of conditioning which brings the cores to air temperature, the spraying stage begins. The cores are carried cyclically by the airstream to an area of the granulator containing the sprayed particles of dispersion, which adhere to the cores. The wetted cores are then conveyed to an area of the granulator where they are dried in air.

In this way, in successive stages, a coating shell is created which consists of the constituents of the suspension less the water, which mostly evaporates.

The spraying speed of the polymer suspension and the temperatures, air speed and other parameters are adjusted according to routine experiments by skilled personnel.

The Applicant has surprisingly found that, contrary to the teachings about the use of vinyl polymer emulsions without surfactants as adhesives, in the present application the cores do not adhere substantially to one another during manufacture or the subsequent stages, including storage of the finished product.

Without wishing to be bound by theoretical considerations, we consider that this lack of adherence is due to the speed and efficacy of the evaporation operation.

The amount of residual water in the slow-release dietary formulation is preferably below 3%, and even more preferably below 1.5% by weight of the final formulation.

The total amount of the outer coating is preferably greater than 10% and less than 50%, even more preferably between 15% and 35% by weight of the final formulation.

The coating method and percentages of the outer coating are such that the core is totally covered by the outer coating.

One skilled in the art will realise that the present invention can be subject to many variations. For example, the inclusion of water-soluble additives in the outer coating can modify its release properties and/or external appearance (for example, if these additives are colorants) and/or organoleptic impact (for example, if they are sweeteners). The present invention can be made in numerous particle sizes, by suitably varying the particle size of the water-soluble cores and secondarily, the percentage of coating.

For instance, the water soluble core particle size distribution for at least 90% by weight between 50 µ and 2000 µ, preferably between 200 µm and 1200 µm.

In a different embodiment, the particle size distribution of at least 90% by weight of the water soluble core plus the intermediate coating is between 50 µm and 2000 µm, preferably between 200 µm and 1200 µm.

In another embodiment, the particle size distribution of at least 90% by weight of dietary formulation is between 100 µm and 3000 µm, preferably between 200 µm and 1500 µm.

Fat-soluble ingredients can also be included in the outer coating, for example polymers used in the manufacture of gum base such as polyhydroxyalkanoates, polybutene, polyisobutylene, polyterpenes, isoprene-isobutylene copolymers, styrene-butadiene copolymers, chicle, jelutong and mixtures thereof.

### Applications

The present invention can be used in edible compositions; edible compositions in the form of confectionery products are preferred, and chewing gum is particularly preferred.

Confectionery products include, for example: gumdrops, toffee, hard sweets, fondants, jellied sweets, extruded products and tablets. Said products can commonly be enriched by the presence of fillings (liquid, soft or hard) and coatings, the most common of which are soft coatings and hard coatings. The various types of coated product are often combined to obtain new products.

A particularly preferred embodiment of the present invention is its application in chewing gum. Chewing gum has a particularly long residence and chewing time in the mouth, which particularly benefits from the presence of slow-release dietary formulations.

Chewing gum can made in various formats: sticks, slabs and cigarettes are typical non-coated formats. Cushion, ball, cube and disc shapes are formats typical of coated chewing gum. Coated chewing gum means gum containing at least one central area, comprising the gum base, called the core, and an outer crust, called the coating.

The first stage of chewing gum manufacturing process is to make a mixture from which the core of the chewing gum will be obtained. The core typically comprises at least one gum base and at least one sweetener.

Gum base can consist of elastomers, resins, plasticisers, filling agents and emulsifiers.

Elastomers and resins consist of polymer materials with different physical properties (such as different elasticities), and their balance influences the sensation (hardness, elasticity, chewability, etc.) which the final chewing gum will give to the consumer.

Examples of the polymers which can be used are polyvinyl acetate, polyvinyl laurate, polyhydroxyalkanoates, polyvinylpyrrolidone (possibly cross-linked), polybutene, polyisobutylene, polyterpenes, isoprene-isobutylene copolymers and styrene-butadiene copolymers. Natural gums such as chicle and jelutong can also be used.

Plasticisers include rosin esters (optionally hydrogenated), oils (preferably hydrogenated oils), and glycerol esters.

The most commonly used fillers include talc and calcium carbonate.

The most commonly used emulsifiers include sucrose esters and lecithins.

In addition to the ingredients described above, gum base can also contain antioxidants (BHA, BHT) and other additives.

The sweetener can be selected from sugars (in solid form, such as sucrose, or in syrup form, such as glucose syrup), polyols (in solid form, such as sorbitol, or in syrup form, such as maltitol syrup), and combinations thereof. The mixture may also contain one or more of the following substances: flavours in solid or liquid form, wetting agents, technological adjuvants such as emulsifiers or plasticisers, pharmacological active constituents, plant extracts, functional ingredients such as vitamins or mineral salts, and colorants.

In a particularly preferred embodiment, the slow-release dietary formulation is inserted in the mixture.

The mixture can be processed by any known methodology, such as the use of continuous extruders or discontinuous mixing equipment.

When the mixture has been prepared, it is processed to obtain a plurality of cores consisting of chewing gum. The mixture usually undergoes two consecutive extrusion stages. At the pre-extrusion stage (first extrusion stage) the mixture is extruded in the form of loaves with a very soft consistency. This is followed by a cooling stage, after which said loaves undergo an extrusion stage (second extrusion stage) from which the mixture, with its constituents suitably processed and homogeneously amalgamated, is extruded in the form of cylindrical ropes or leaves. In order to form the plurality of chewing gum cores, the mixture exiting from the extrusion stage (second extrusion stage) is conveyed to a subsequent stage of rolling or moulding. Preferably, the cores obtained from the rolling or moulding stage present a discoidal, cylindrical, cubic or spherical geometrical configuration, with a longitudinal cross-section which is diamond-shaped, rectangular or rectangular with rounded corners (pillow-shaped). The cores thus obtained preferably undergo a cooling stage, which is consequently subsequent to the rolling or moulding stage.

The manufacturing process can also include a stage of introduction into the extruded mixture of a filling preparation into the body of the chewing gum, said introduction stage being performed after or at the same time as the extrusion stage, and before the rolling or moulding stage. The filling can be liquid, solid, granular or gelatinous. Depending on the type of core and the filling material, and on the shape of the piece of chewing gum, the filling can be totally incorporated in the piece of chewing gum or be visible from the outside on one or more sides of the chewing gum.

The cores thus obtained, comprising the composition according to the invention, are subjected to the subsequent processing stages. In the case of coated gums, said stages involve the application of hard or soft coatings according to the prior art. In the case of uncoated gums (sticks and slabs), the subsequent stages mainly involve wrapping.

The Applicant has found that a particularly advantageous embodiment of the present invention, wherein the ingredient active performs an organoleptic function, is its application to centre-filled gums. In these gums, the filling is released very quickly during chewing, and at the subsequent stages, consumers perceive the flavour as faint. The inclusion of the present invention in the core makes the consumers perceive a sustained flavour as chewing continues.

The Applicant has also discovered that the present invention can also be used to produce flavour effects in which, for example, the filling or any part of the chewing gum presents a first flavour, which tends to decrease over time, while the core, or any part, to which the present invention is added (with an active ingredient having an organoleptic function) presents a second flavour which appears over time.

More than one composition according to the invention, containing different active ingredients, can obviously be inserted in a chewing gum. A series of further advantages can thus be obtained. For example, a first composition comprising a vitamin, and a second composition comprising a flavour that masks its taste, can be inserted. Alternatively, a first composition comprising a lemon flavour and a second composition comprising a mint flavour can be inserted, to give a mix of flavours that lasts throughout the chewing time.

Two examples of the invention are given below: a comparative example and an example of its application in chewing gum.

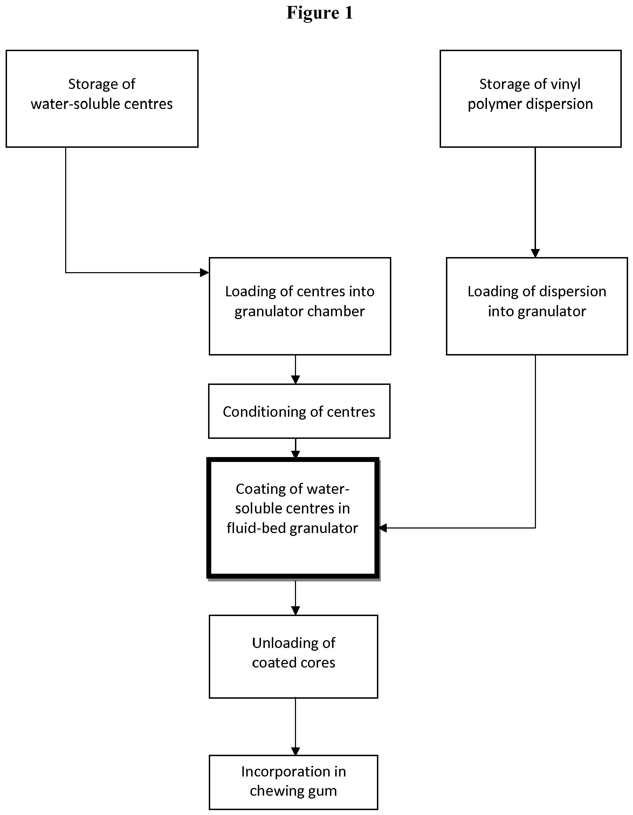

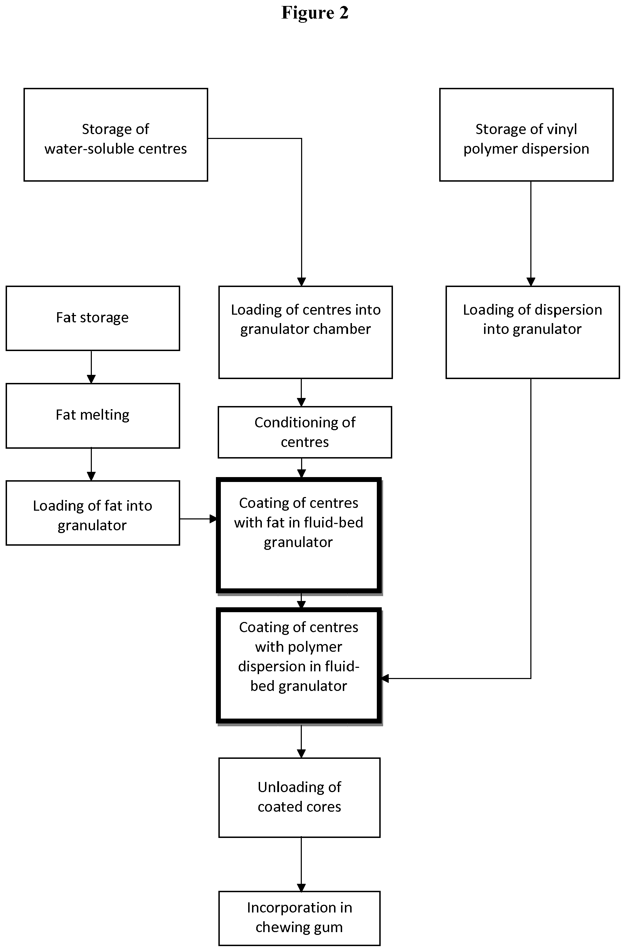

Figures 1 and 2 are two block diagrams of possible manufacturing processes according to the invention.

### Example 1 (invention)

This example describes how to obtain a dietary formulation for the slow release of citric acid.

Anhydrous citric acid in granules (1215 g) with 90% by weight of particles between 250 and 1000 µ is placed in a fluid-bed granulator.

Hydrogenated vegetable fat is placed in a tank heated to 70°C and dissolved.

The citric acid is coated in the granulator until 100 g of fat has been used. Particles of fat-coated acid with the following composition are obtained

| **Ingredient** | **g of dry matter** | **% of dry matter** |
|---|---|---|
| Anhydrous citric acid | 1215.0 | 92.4 |
| Hydrogenated vegetable fat | 100.0 | 7.6 |
| Total | 1315.0 | 100 |

The particles are unloaded and, after cleaning of the system, reloaded into the same granulator.

A mixture at room temperature is prepared separately in the proportions described in the table below.

| **Ingredient** | **g** | **%** |
|---|---|---|
| Dispersion of polyvinyl acetate/polyvinyl alcohol in water | 1500.0 | 59.5 |
| Addition of water | 1000.0 | 39.7 |
| Propylene glycol | 20.0 | 0.8 |
| **Total** | **2520.0** | **100** |

The mixture is sprayed in the fluid-bed granulator onto the fluidized mass of coated acid previously obtained, at suitable temperatures and speed, until 900 g has been used. The resulting slow-release dietary formulation, wherein the active ingredient is citric acid, has the composition shown in the table below

| **Ingredient** | **g** | **%** |
|---|---|---|
| Anhydrous citric acid | 1215.00 | 64.8 |
| Hydrogenated vegetable oil | 100.00 | 5.3 |
| Polyvinyl acetate / polyvinyl alcohol | 535.71 | 28.5 |
| Propylene glycol | 7.14 | 0.4 |
| Residual water | 18.77 | 1 |
| **Total** | **1876.62** | 100 |

### Example 2 (comparison)

A method of obtaining an encapsulated acid according to EP0229000 (melt-blend method) is reproduced

| **Ingredient** | **g** | **%** |
|---|---|---|
| Anhydrous citric acid in powder form | 60 | 25 |
| Polyvinyl acetate | 120 | 50 |
| Glycerol monostearate | 60 | 25 |
| **Total** | **240** | 100 |

The polyvinyl acetate is heated and mixed at over 80°C with glycerol monostearate, until a homogenous, plastic molten mass (melt-blend) has been obtained. The mass is removed from the heat source and powdered citric acid is added slowly. The mass is cooled until it solidifies, and then ground in a cryogenic grinder until a powder with a particle size below 600 µ has been obtained.

### Example 3 (application in chewing gum)

Examples 1 and 2 are incorporated in a sugar-free stick weighing 3 grams with the following formula:

| **Ingredient** | **Gum A (according to the invention)** | **Gum B comparator** |
|---|---|---|
| | **%** | **%** |
| Gum base | 35.00 | 35.00 |
| Aspartame | 0.06 | 0.06 |
| Acesulfame | 0.06 | 0.06 |
| Sucralose | 0.05 | 0.05 |
| Encapsulated aspartame with 25% filling | 2.00 | 2.00 |
| **COATED CITRIC ACID, EXAMPLE 1** | 1.55 | |
| **COATED CITRIC ACID, EXAMPLE 3** | | 4 |
| Malic acid | 1.90 | 1.90 |
| Maltitol syrup | 2.40 | 2.40 |
| Sorbitol | 33.00 | 33.00 |
| Watermelon flavour (liquid) | 3.00 | 3.00 |
| Glycerol | 0.50 | 0.50 |
| Xylitol in example A | 20.48 | |
| Xylitol in example B | | 18.03 |
| **Total** | **100** | **100** |

Each stick, weighing 3 grams, contains the same percentage of citric acid (approx. 1%).

A group of 5 expert tasters tasted stick A and reported the sensation of acidity on a VAS scale (visual analogue scale) ranging from 0 (not acid) to 10 (strong, unpleasant acidity) every 2 minutes during 10 minutes' chewing. The next day, the procedure was repeated for stick B.

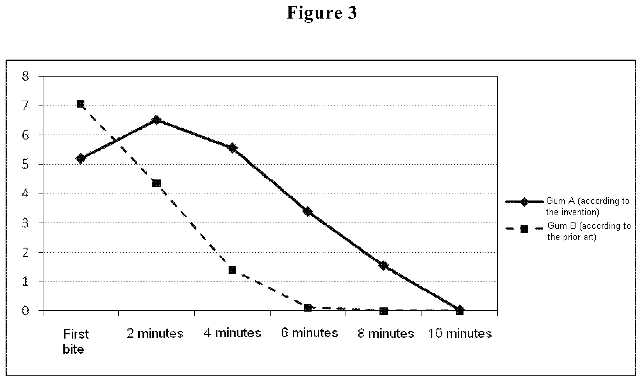

The result of the two organoleptic tests is set out in the table below and in the graph in figure 3 as the mean organoleptic perception of the tasters.

| Type of gum | First bite | 2 min | 4 min | 6 min | 8 min | 10 min |
|---|---|---|---|---|---|---|
| Gum A | 5.2 | 6.52 | 5.56 | 3.38 | 1.54 | 0.04 |
| Gum B | 7.04 | 4.34 | 1.4 | 0.12 | 0 | 0 |

## Claims

1. A dietary formulation for the slow release of an active ingredient comprising the following elements:
a) a water-soluble core comprising at least one active ingredient;
b) an outer coating which completely coats the core a);
containing less than 3% water, obtainable by evaporation of an aqueous dispersion, the aqueous dispersion
- substantially consisting of polyvinyl acetate and polyvinyl alcohol as a protective colloid
wherein:
- the dispersion and the outer coating are free from emulsifiers; and
- the dispersion and the outer coating are free from polyvinylpyrrolidone.

2. A formulation according to claim 1 wherein an intermediate coating **characterised by** lower water-solubility than that of core a) is inserted between core a) and outer coating b).

3. A formulation as claimed in claim 2 wherein the intermediate coating substantially consists of a fat of animal or vegetable origin or a synthetic fat, optionally selected from completely hydrogenated, partially hydrogenated or fractioned fats.

4. A formulation as claimed in claims 2 and 3 wherein the intermediate coating has a solid state percentage higher than 70% at 40°C, and preferably higher than 90% at 40°C.

5. A formulation as claimed in any one of the above claims wherein the active ingredient is selected from a flavour in solid form, an acid, a vitamin, a mineral salt, a herbal extract, a sweetening agent and combinations thereof.

6. A formulation as claimed in claim 5 wherein the acid is selected from the following acids: adipic, citric, fumaric, lactic, malic, oxalic, succinic, tartaric and combinations thereof.

7. A formulation as claimed in claim 5 wherein the flavour is carried by a formulation comprising gum arabic, maltodextrin, starch, modified starches, carbohydrates, polyalcohols, gelatin, pectin, cellulose, modified celluloses, vegetable gums, and combinations thereof.

8. A formulation as claimed in any one of the above claims wherein the active ingredient percentage is higher than 50% of the weight of the formulation, preferably higher than 60% of the weight of the formulation.

9. A formulation as claimed in any one of the above claims wherein the percentage of outer coating b) is higher than 10% by weight of the formulation and lower than 50%, even more preferably between 15% and 35% of the weight of the final formulation.

10. A formulation as claimed in any one of the above claims wherein the outer coating contains a plasticiser preferably selected from propylene glycol, triacetin and mixtures thereof.

11. An edible composition containing one or more formulations as claimed in any one of the above claims, optionally in a mixture thereof.

12. An edible composition as claimed in claim 11 in the form of a confectionery product, preferably in the form of a chewing gum.

13. A formulation as claimed in any one of the above claims 1-10 wherein the core containing the active ingredient, optionally coated with the intermediate coating, is coated with outer coating b) by means of a fluid-bed process.

14. A formulation as claimed in claim 13 wherein the intermediate coating is applied by means of a fluid-bed process.

15. A formulation as claimed in claim 14 wherein the intermediate and outer coatings are applied continuously in the same fluid-bed granulator.

## Patentansprüche

1. Diätformulierung zur langsamen Freisetzung eines Wirkstoffs, die folgende Elemente umfasst:
a) einen wasserlöslichen Kern, der wenigstens einen Wirkstoff umfasst;
b) einen äußeren Überzug, der den Kern a) vollständig überzieht;
der weniger als 3 % Wasser enthält und durch Verdampfung einer wässrigen Dispersion erhältlich ist, wobei die wässrige Dispersion
- im Wesentlichen aus Polyvinylacetat und Polyvinylalkohol als Schutzkolloid besteht,
wobei:
- die Dispersion und der äußere Überzug frei von Emulgatoren sind; und
- die Dispersion und der äußere Überzug frei von Polyvinylpyrrolidon sind.

2. Formulierung nach Anspruch 1, wobei ein Zwischenüberzug, der durch eine geringere Wasserlöslichkeit als diejenige des Kerns a) gekennzeichnet ist, zwischen dem Kern a) und dem äußeren Überzug b) eingefügt ist.

3. Formulierung nach Anspruch 2, wobei der Zwischenüberzug im Wesentlichen aus einem Fett tierischer oder pflanzlicher Herkunft oder einem synthetischen Fett besteht, das optional aus vollständig gehärteten, teilweise gehärteten oder fraktionierten Fetten ausgewählt ist.

4. Formulierung nach den Ansprüchen 2 und 3, wobei der Zwischenüberzug im festen Zustand einen prozentualen Anteil von höher als 70 % bei 40 °C und vorzugsweise höher als 90 % bei 40 °C aufweist.

5. Formulierung nach einem der obenstehenden Ansprüche, wobei der Wirkstoff aus einem Aroma in fester Form, einer Säure, einem Vitamin, einem Mineralsalz, einem Kräuterextrakt, einem Süßungsmittel und Kombinationen derselben ausgewählt ist.

6. Formulierung nach Anspruch 5, wobei die Säure aus den folgenden Säuren ausgewählt ist: Adipin-, Citronen-, Fumar-, Milch-, Äpfel-, Oxal-, Bernstein-, Weinsäure und Kombinationen derselben.

7. Formulierung nach Anspruch 5, wobei das Aroma durch eine Formulierung getragen wird, die Gummi arabicum, Maltodextrin, Stärke, modifizierte Stärken, Kohlenhydrate, Polyalkohole, Gelatine, Pektin, Cellulose, modifizierte Cellulosen, pflanzliche Gummis und Kombinationen derselben umfasst.

8. Formulierung nach einem der obenstehenden Ansprüche, wobei der prozentuale Anteil des Wirkstoffs höher als 50 % des Gewichts der Formulierung, vorzugsweise höher als 60 % des Gewichts der Formulierung ist.

9. Formulierung nach einem der obenstehenden Ansprüche, wobei der prozentuale Anteil des äußeren Überzugs b) höher als 10 Gewichts-% der Formulierung und niedriger als 50 % ist, insbesondere zwischen 15 % und 35 % des Gewichts der endgültigen Formulierung beträgt.

10. Formulierung nach einem der obenstehenden Ansprüche, wobei der äußere Überzug einen Weichmacher enthält, der vorzugsweise aus Propylenglykol, Triacetin und Gemischen derselben ausgewählt ist.

11. Essbare Zusammensetzung, die eine oder mehrere Formulierungen nach einem der obenstehenden Ansprüche, optional in einem Gemisch derselben, enthält.

12. Essbare Zusammensetzung nach Anspruch 11 in Form einer Süßware, vorzugsweise in Form eines Kaugummis.

13. Formulierung nach einem der obenstehenden Ansprüche 1-10, wobei der Kern, der den Wirkstoff enthält, der optional mit dem Zwischenüberzug überzogen ist, mit dem äußeren Überzug b) mittels eines Wirbelschichtverfahrens überzogen wird.

14. Formulierung nach Anspruch 13, wobei der Zwischenüberzug mittels eines Wirbelschichtverfahrens aufgebracht wird.

15. Formulierung nach Anspruch 14, wobei der Zwischen- und der äußere Überzug kontinuierlich in derselben Wirbelschichtgranuliermaschine aufgebracht werden.

## Revendications

1. Formulation alimentaire pour la libération lente d'un principe actif comprenant les éléments suivants :
a) un coeur hydrosoluble comprenant au moins un principe actif ;
b) un revêtement externe qui revêt complètement le coeur a) ;
contenant moins de 3 % d'eau, que l'on peut obtenir par évaporation d'une dispersion aqueuse, la dispersion aqueuse
- constituée essentiellement d'acétate de polyvinyle et d'alcool polyvinylique comme colloïde protecteur
où :
- la dispersion et le revêtement externe sont exempts d'émulsifiants ; et
- la dispersion et le revêtement externe sont exempts de polyvinylpyrrolidone.

2. Formulation selon la revendication 1 dans laquelle un revêtement intermédiaire **caractérisé par** une hydrosolubilité inférieure à celle du coeur a) est inséré entre le coeur a) et le revêtement externe b).

3. Formulation selon la revendication 2 dans laquelle le revêtement intermédiaire consiste essentiellement en un graisse d'origine animale ou végétale ou une graisse synthétique, éventuellement choisie parmi les graisses complètement hydrogénées, partiellement hydrogénées ou fractionnées.

4. Formulation selon les revendications 2 et 3 dans laquelle le revêtement intermédiaire a un pourcentage d'état solide supérieur à 70 % à 40 °C, et de préférence supérieur à 90 % à 40 °C.

5. Formulation selon l'une quelconque des revendications ci-dessus dans laquelle le principe actif est choisi parmi une saveur sous forme solide, un acide, une vitamine, un sel minéral, un extrait végétal, un agent édulcorant et leurs combinaisons.

6. Formulation selon la revendication 5 dans laquelle l'acide est choisi parmi les acides suivants : adipique, citrique, fumarique, lactique, malique, oxalique, succinique, tartrique et leurs combinaisons.

7. Formulation selon la revendication 5 dans laquelle la saveur est portée par une formulation comprenant la gomme arabique, la maltodextrine, l'amidon, des amidons modifiés, des glucides, des polyalcools, la gélatine, la pectine, la cellulose, des celluloses modifiées, des gommes végétales et leurs combinaisons.

8. Formulation selon l'une quelconque des revendications ci-dessus dans laquelle le pourcentage de principe actif est supérieur à 50 % du poids de la formulation, de préférence supérieur à 60 % du poids de la formulation.

9. Formulation selon l'une quelconque des revendications ci-dessus dans laquelle le pourcentage de revêtement externe b) est supérieur à 10 % en poids de la formulation et inférieur à 50 %, encore davantage de préférence entre 15 % et 35 % du poids de la formulation finale.

10. Formulation selon l'une quelconque des revendications ci-dessus dans laquelle le revêtement externe contient un plastifiant choisi de préférence parmi le propylène glycol, la triacétine et leurs mélanges.

11. Composition comestible contenant une ou plusieurs formulations selon l'une quelconque des revendications ci-dessus, éventuellement dans un de leurs mélanges.

12. Composition comestible selon la revendication 11 sous forme d'un produit de confiserie, de préférence sous forme de chewing gum.

13. Formulation selon l'une quelconque des revendications 1 à 10 ci-dessus dans laquelle le coeur contenant le principe actif, éventuellement revêtu avec le revêtement intermédiaire, est revêtu avec le revêtement externe b) au moyen d'un processus à lit fluidisé.

14. Formulation selon la revendication 13 dans laquelle le revêtement intermédiaire est appliqué au moyen d'un processus à lit fluidisé.

15. Formulation selon la revendication 14 dans laquelle les revêtements intermédiaire et externe sont appliqués en continu dans le même granulateur à lit fluidisé.
